# FASCICULE DE BREVET EUROPEEN

(11) **EP 2 857 710 B1**
(45) Date de publication et mention de la délivrance du brevet: **28.08.2019**
(21) Numéro de dépôt: 14186607.9
(22) Date de dépôt: 26.09.2014
(51) Int. Cl.: F16F 1/12, F16F 1/13

(54) **Dispositif d'amortissement comportant un organe de battement.**
Schwingungsdämpfer mit einer Massendämpfer
Vibration absorber with a mass damper

(30) Priorité: 04.10.2013 FR 1359655
(43) Date de publication de la demande: 08.04.2015
(73) Titulaire: SumiRiko SD France S.A.S., 58300 Decize Cedex (FR)
(72) Inventeur: Jandot, Gérard, 58000 NEVERS (FR); Skiera, Jean-François, 58340 CERCY LA TOUR (FR); Dupuis, Frédéric, 58000 NEVERS (FR); Israel, Alain, 58300 SAINT-LEGER DES VIGNES (FR)
(74) Mandataire: Derambure, Christian

(56) Documents cités:
- EP-A1- 0 574 650
- EP-A1- 1 081 407
- FR-A1- 2 574 143
- FR-A1- 2 945 476
- US-A1- 2011 121 500

## Description

L'invention concerne, de façon générale, le domaine technique des dispositifs d'amortissement et, en particulier, celui des dispositifs d'amortissement à ressort, comme par exemple les suspensions pour véhicules.

Plus précisément, l'invention porte sur la question de la limitation des perturbations vibratoires d'un dispositif d'amortissement à ressort qui sont, notamment dans le cas des ressorts de suspension, génératrices de bruyance.

Il est connu de l'art antérieur différentes solutions visant à limiter les modes vibratoires indésirables des ressorts.

Notamment la publication FR1308763 se rapporte à un dispositif d'amortissement pour véhicules comportant un ressort à spires. Une bague en caoutchouc est disposée sur une extrémité de ressort de façon à former une interface entre l'extrémité du ressort et une surface d'appui.

La publication WO 2012/139782 porte sur un dispositif d'amortissement dans lequel une colle est prévue entre les extrémités du ressort et les garnitures de ressort. La colle permet de réaliser une interface, évitant ainsi un contact direct entre le ressort et les garnitures de ressort.

De telles réalisations permettent de limiter la transmission de la charge et ainsi de réaliser un filtrage vibratoire à l'extrémité du ressort en liaison avec la surface d'appui qui la reçoit.

Le document US 2011/0121500 décrit un dispositif d'absorption pour un ressort de suspension de véhicule qui comprend un premier et un second isolateurs, chacun avec deux trous de montage sur deux tronçons espacés de spire du ressort.

Le document EP 1 081 407 décrit un ressort à boudins avec un amortisseur d'oscillations adapté à une fréquence de résonance du ressort, de sorte que s'il est excité dans ce domaine de fréquences, l'énergie d'oscillation du ressort est au moins partiellement transférée à l'amortisseur d'oscillations. Cet amortisseur de vibrations présente un élément de masse et un élément de ressort.

Le document FR 2 574 143 décrit un amortisseur de vibrations pour des corps disposés d'une manière essentiellement parallèle les uns aux autres et constitué d'une pince en matériau possédant une élasticité permanente et pouvant être fixée par emboîtement et sans déplacement sur l'un de ces corps et d'au moins deux pattes faisant saillie de cette pince en direction d'au moins l'un des autres corps, ces pattes venant au contact des autres corps, avec possibilité de déplacement relatif et sous précontrainte élastique

L'état de la technique est également illustré par le document EP 0 574 650 qui concerne un amortisseur de vibrations pour le mouvement d'au moins deux corps pouvant subir un déplacement relatif l'un par rapport à l'autre, qui comprend un profil en U saillant par rapport à la direction de déplacement et est fixé sur un corps respectif dans la zone de ses branches saillantes, les branches se coupant en formant un angle et formant une articulation où elles se croisent, l'amortisseur étant fabriqué d'une seule pièce en gomme élastique présentant un amortissement donné. L'angle est compris entre 45° et 180° et les branches sont des clips élastiques dans la zone des extrémités situées du côté des corps et peuvent être fixées sur les corps par encliquetage. Les branches sont pourvues d'une armature, au moins dans les zones des clips élastiques et de l'articulation.

Le document FR 2 945 476, qui est considéré comme l'art antérieur le plus proche, décrit des batteurs à inertie en forme de H pour ressort hélicoïdal.

Dans le contexte de l'invention, le dispositif d'amortissement comprend un ressort hélicoïdal comportant un axe de compression, une première extrémité de ressort et une seconde extrémité de ressort et une pluralité de spires s'étendant selon l'axe de compression entre la première extrémité et la seconde extrémité. Le dispositif d'amortissement comprend en outre un organe de support comportant une première assise et une seconde assise. La première assise est destinée à recevoir en appui la première extrémité du ressort, et la seconde assise est destinée à recevoir en appui la seconde extrémité de ressort.

Toutefois, il a également été observé qu'il persiste des modes vibratoires, notamment pour ce qui est des spires entre les extrémités des ressorts, qui peuvent être génératrices de bruyance. Il existe par conséquent le besoin de limiter les perturbations vibratoires pour ce qui est de ces spires tout en garantissant un dispositif d'amortissement simple à mettre en oeuvre sans augmentation excessive démesurée des coûts de fabrication.

À cette fin, le dispositif d'amortissement selon l'invention, par ailleurs conforme à la définition donnée ci-dessus, qui comporte un moyen pour limiter les modes vibratoires indésirables du ressort est caractérisé par le fait que le moyen pour limiter les modes vibratoires indésirables du ressort comporte un organe de battement localisé, solidaire d'une portion de spire du ressort entre la première extrémité de ressort et la seconde extrémité de ressort. La solidarisation de l'organe de battement à ladite portion de spire est agencée de sorte que l'organe de battement, d'une part, ne peut se déplacer substantiellement le long de la spire, d'autre part, peut osciller par rapport à un axe central de la portion de spire dans la mesure où il n'interfère pas avec la spire. L'organe de battement a une fréquence de résonnance propre dépendante des modes vibratoires du ressort de façon à amortir la fréquence de vibration des spires du ressort.

Les phénomènes de battement de l'organe de battement (ou organe antivibratoire) sont en relation avec sa résonance modale (typique d'un système équivalent masse ressort). Ces modes de battement sont influencés par les amplitudes, les fréquences de sollicitation et la raideur du système.

Grâce à cette réalisation, un amortissement de mode vibratoire de ressort est réalisé pour des spires entre les deux extrémités de ressort, sans impacter substantiellement la mise en oeuvre du dispositif d'amortissement.

Selon une réalisation, au moins un deuxième organe de battement est prévu, associé à une deuxième portion de spire du ressort. Ainsi, les organes de battement de la pluralité d'organes de battement peuvent agir de façon complémentaire et augmenter l'amortissement d'un ou de plusieurs mode(s) vibratoire de ressort indésirable(s).

Selon une autre réalisation, l'organe de battement comporte un logement de solidarisation à la portion de spire du ressort, présente une capacité de déformation élastique à l'endroit du logement, et le logement inclut une ouverture d'encliquetage et une face d'appui glissant en forme générale de secteur cylindrique. L'organe de battement est facilement disposé sur la spire désirée du ressort à l'endroit plus approprié selon les fréquences de vibration.

Selon une réalisation, l'organe de battement est solidarisé à la portion de spire par adhérisation à chaud ou adhérisation à froid de l'organe de battement sur la portion de spires. L'adhérisation à chaud ou à froid assure une fixation robuste.

Selon une réalisation alternative, l'organe de battement solidarise l'organe de battement sur la portion de spire par serrage mis en oeuvre par une portion élastomère élastiquement comprimée de l'organe de battement sur la portion de spire.

Selon une réalisation, l'organe de battement est entièrement réalisé en matériau élastomère et/ou en matériau semi-rigide. Ces matériaux présentent des propriétés élastiques ou semi-élastiques facilitant notamment leur mise en position sur la spire, tout en assurant une rigidité nécessaire pour réaliser leur fonction de battement.

Selon une réalisation, l'organe de battement comporte une enveloppe réalisée dans un premier matériau ayant une première densité et un noyau réalisé dans un deuxième matériau ayant une deuxième densité, et la deuxième densité est supérieure à la première densité. Le noyau assure une fonction d'augmentation localisée de la masse, ce qui permet un fort amortissement du mode vibratoire, ajustable par l'amortissement intrinsèque du premier matériau.

Selon une réalisation l'organe de battement comporte une première jambe et une seconde jambe reliées entre elles par une partie de liaison, et la première jambe et la seconde jambe s'étendent selon des directions d'extension parallèles dans deux sens opposés à partir de la partie de liaison. La première jambe et la seconde jambe réalisent le mouvement de battement de l'organe de battement.

Selon une réalisation, la première jambe et la deuxième jambe sont adaptées pour osciller par déformation élastique.

Selon une réalisation complémentaire, la partie de liaison comporte le logement de solidarisation de l'organe de battement à la portion de spire du ressort, l'ouverture d'encliquetage ayant, en l'absence de sollicitation extérieure, une dimension transversale légèrement plus petite que le diamètre de la spire du ressort. Cette caractéristique facilite l'assemblage de type « clip ».

Selon une réalisation complémentaire, la première jambe et/ou la seconde jambe(s) sont droites et s'étend(ent) sur une longueur selon leur direction d'extension sensiblement égale à la longueur parcourue par deux spires du ressort dans la direction de l'axe de compression. Ces dimensions sont particulièrement avantageuses pour la fonction de « battement » de l'organe de battement.

Selon une réalisation complémentaire, la pluralité de spires du ressort définit un espace intérieur de ressort, et la première jambe est agencée dans l'espace intérieur de ressort. L'agencement de la première jambe dans l'espace intérieur de ressort permet d'assurer une absence d'interférence entre l'organe de battement et les spires du ressort.

Selon une réalisation complémentaire, la pluralité de spires du ressort définit un espace intérieur de ressort, et la seconde jambe est agencée hors de l'espace intérieur de ressort. L'agencement de la seconde jambe hors de l'espace intérieur de ressort permet d'assurer une absence d'interférence entre l'organe de battement et les spires du ressort.

Selon une réalisation complémentaire, la première jambe et la partie de liaison sont reliées entre elles par un premier coude, et la seconde jambe et la partie de liaison sont reliées entre elles par un second coude. Les deux coudes permettent à l'organe de battement d'avoir une forme facilitant l'oscillation.

Selon une réalisation alternative, la pluralité de spires du ressort définit un espace intérieur de ressort, et la première jambe et la seconde jambe s'étendent toutes les deux hors de l'espace intérieur de ressort.

Selon une réalisation, la spire à laquelle l'organe de battement est solidarisé est située dans la portion centrale du ressort de façon que l'organe de battement amortisse la fréquence de vibration des spires appartenant à ladite portion centrale du ressort. Les spires de la portion centrale sont particulièrement touchées par les perturbations vibratoires génératrices de bruyance.

On décrit maintenant brièvement les figures des dessins.
La figure 1 est une vue d'ensemble en perspective d'un dispositif d'amortissement comportant un ressort hélicoïdal, une première assise et une seconde assise et un organe de battement selon l'invention.
La figure 2 est une vue de détail d'une variante de réalisation du dispositif d'amortissement selon l'invention comportant deux organes de battement.
La figure 3 est une vue en coupe longitudinale de l'organe de battement du dispositif d'amortissement de la figure 1, normale à son axe d'oscillation.
La figure 4 est une vue en coupe longitudinale d'une variante de réalisation de l'organe de battement du dispositif de la figure 1 normale à son axe d'oscillation.
La figure 5 est une vue en perspective d'un ressort et d'un organe de battement d'un dispositif d'amortissement selon une variante de réalisation.
La figure 6 est une vue de côté d'une variante de réalisation de l'organe de battement de la figure 5.
Les figures 7a à 7c illustrent de façon schématique le battement de la première et de la deuxième jambe de battement de l'organe de battement de la figure 5.
Les figures 8a et 8b sont des vues respectivement en perspective et en coupe d'une variante de réalisation de l'organe de battement selon l'invention, dans lequel deux parties de l'organe de battement sont encliquetées pour assembler l'organe de battement autour de la spire.
Les figures 9a et 9b sont des vues respectivement en perspective et en coupe d'une variante de réalisation de l'organe de battement selon l'invention, dans lequel deux parties de l'organe de battement sont fixées l'une à l'autre par complémentarité de forme pour assembler l'organe de battement autour de la spire.

Ci-après un exposé détaillé de plusieurs modes de réalisation de l'invention assorti d'exemples et de référence aux dessins.

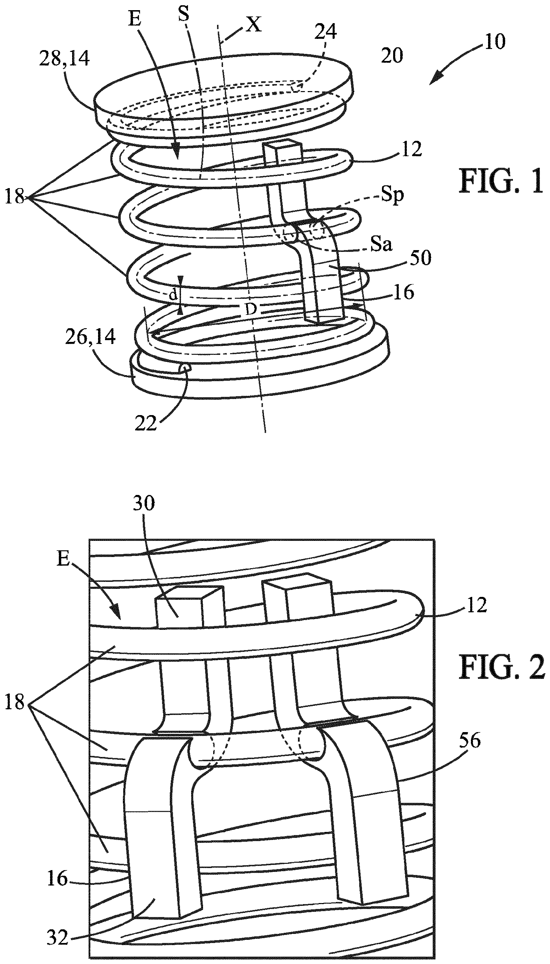

La figure 1 illustre un mode de réalisation d'un dispositif d'amortissement 10 selon l'invention.

Le dispositif d'amortissement 10 comporte un ressort hélicoïdal 12 (encore appelé ci-après ressort 12), un organe de support 14 ainsi qu'un dispositif de limitation des modes vibratoires indésirables du ressort qui est ici un organe de battement 16.

Le ressort 12 s'étend longitudinalement selon un axe de compression X. Le ressort 12 comporte une pluralité de spires 18. Classiquement, le ressort hélicoïdal 12 est un ressort de compression et est composé d'un fil 20 enroulé en hélice autour de l'axe de compression X. Le ressort a un diamètre général D. Chaque tour complet de l'hélice du fil 20 forme une spire 18. En l'espèce, et tel que représenté sur la figure 1, le ressort comprend six spires 18 distinctes. Le ressort hélicoïdal 12 comporte en outre une première extrémité 22 de ressort et une seconde extrémité 24 de ressort correspondant aux deux extrémités du fil 18 enroulé formant le ressort 12. La pluralité de spires 18 s'étend entre la première extrémité 22 de ressort et la seconde extrémité 24 de ressort selon l'axe de compression X.

Chaque spire 18 a une section circulaire de diamètre de spire d. En l'espèce, tel que représenté sur la figure 1, toutes les spires 18 ont le même diamètre de spire d, qui est constant. Avantageusement, le diamètre de spire d est de l'ordre de 12 millimètres (mm) lorsque le diamètre général du ressort D est de l'ordre de 150mm. Les spires 18 du ressort 12 comportent un axe central de spire S. L'axe central de spire S forme une hélice autour de l'axe de compression X.

La pluralité de spires 18 du ressort 12 permet de délimiter une enveloppe qui forme ce que l'on peut appeler l'espace intérieur de ressort E.

Le ressort 12 a un diamètre intérieur égal au diamètre général D (qui est calculé à partir de l'axe de spire S) auquel est soustrait le diamètre de spire d. Le ressort 12 a un diamètre extérieur égal au diamètre général du ressort D auquel est ajouté le diamètre de spire d.

L'organe de support 14 comporte une première assise 26 et une seconde assise 28. La première assise 26 reçoit en appui la première extrémité 22 du ressort 12. Plus précisément, et tel que représenté sur la figure 1, la première assise 26 reçoit en appui une portion de la spire 18 directement adjacente à la première extrémité 22. La portion en appui sur la première assise 26 est sensiblement égale à une demi-spire. De façon similaire, la seconde assise 28 reçoit en appui la seconde extrémité 24 du ressort 12. Plus précisément, et tel que représenté sur la figure 1, la seconde assise 28 reçoit en appui une portion de la spire directement adjacente à la seconde extrémité 24. La portion de spire en appui sur la seconde assise 28 est sensiblement égale à une demi-spire.

Dans une application possible, le dispositif d'amortissement 10 est une suspension pour véhicule, et la première assise 26 est par exemple montée solidaire d'un essieu définissant un axe de rotation d'une roue de véhicule et la seconde assise 28 est montée solidaire de la caisse du véhicule. Toutefois, le dispositif d'amortissement 10 peut être appliqué dans d'autres types de systèmes, et pas uniquement dans le domaine automobile.

La première assise 26 et la seconde assise 28 sont réalisées en matériau polymère. Dans un cas particulier, la première assise 26 et la seconde assise 28 sont réalisées en élastomère. Dans une variante de réalisation, la première assise 26 et la seconde assise 28 sont réalisées en matériau thermoplastique. Ce choix de matériau permet dans la plupart des applications de limiter les perturbations vibratoires pour ce qui est des extrémités du ressort 12.

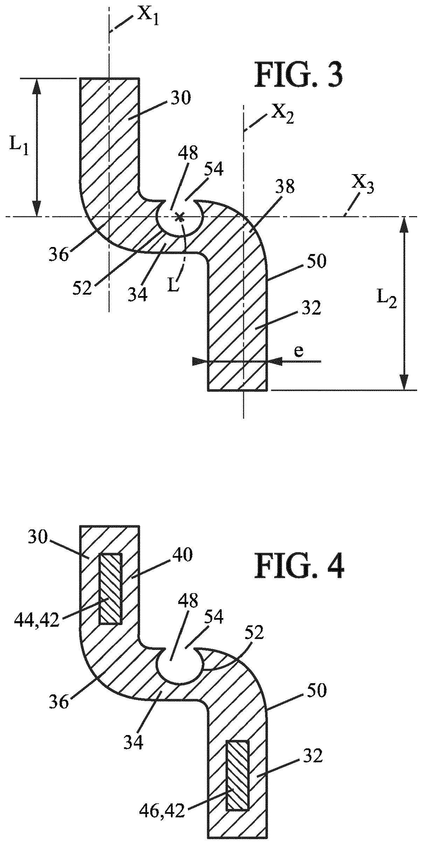

La figure 3 illustre l'organe de battement 16. L'organe de battement 16 comporte une première jambe 30, une seconde jambe 32 et une partie de liaison 34. La partie de liaison 34 relie la première jambe 30 et la seconde jambe 32. La première jambe 30 est reliée à la partie de liaison 34 par un premier coude 36. De façon semblable, la seconde jambe 32 est reliée à la partie de liaison 34 par un second coude 38. L'organe de battement 16 a une certaine épaisseur e. L'épaisseur e de l'organe de battement 16 est constante, ou en d'autres termes, la première jambe 30, la seconde jambe 32 et la partie de liaison 34 ont toutes la même épaisseur. Toutefois dans des variantes de réalisation, l'épaisseur de l'organe de battement 16 peut varier. Par exemple, la première jambe 30 et la seconde jambe 32 peuvent avoir la même épaisseur tandis que la partie de liaison 34 a une épaisseur plus importante, ou au contraire une épaisseur réduite par rapport à celle de la première jambe 30 et de la seconde jambe 32. Dans une autre variante de réalisation possible, la première jambe 30, la seconde jambe 32 et la partie de liaison 34 ont toutes des épaisseurs différentes.

L'organe de battement 16 a par exemple, en élévation latérale, une forme sensiblement en S allongé et aplati. Dans un état au repos, à savoir en l'absence de contraintes extérieures, la première jambe 30 est droite et s'étend selon une première direction d'extension X1. En l'absence de contraintes extérieures, la seconde jambe 32 est droite et s'étend selon une seconde direction d'extension X2. Néanmoins, dans des variantes de réalisation la première jambe 30 et/ou la seconde jambe 32 peuvent ne pas être droites. En l'espèce, comme représenté sur la figure 3, la première direction d'extension X1 et la seconde direction d'extension X2 sont parallèles. Toutefois, dans des variantes de réalisation, la première direction d'extension et la seconde direction d'extension peuvent former un angle non nul. Dans une réalisation, la première jambe 30 a une longueur Llselon la première direction d'extension X1 sensiblement égale à la longueur L2selon la seconde direction d'extension de la seconde jambe 32. Par exemple, la première jambe 30 a une longueur Llselon la première direction d'extension X1 de l'ordre de 30mm.

En l'espèce, la partie de liaison 34 s'étend selon une troisième direction d'extension X3. La troisième direction d'extension X3 peut être sensiblement perpendiculaire à la première direction d'extension X1 et/ou à la seconde direction d'extension X2, ou encore former un angle non nul avec l'une ou l'autre de la première direction d'extension X1 et de la seconde direction d'extension X2. Par exemple, la troisième direction d'extension X3 forme un angle supérieur ou égal à 90° avec la première direction d'extension X1. En outre, la troisième direction forme un angle supérieur ou égal à 90° avec la seconde direction d'extension X2.

Dans une réalisation, l'organe de battement 16 est entièrement réalisé en matériau souple et/ou élastique afin de pouvoir se déformer sous l'effet de sollicitations extérieures et de battre afin d'amortir les modes vibratoires non désirés. Un matériau tel que le polymère peut être utilisé. Par exemple, l'organe de battement 16 est réalisé en matériau élastomère. L'organe de battement 16 est par exemple entièrement moulé en matériau élastomère. Le matériau élastomère confère à l'organe de battement 16 une certaine souplesse lui permettant le cas échéant de se déformer sous l'action de sollicitations extérieures. Toutefois, d'autres matériaux peuvent être envisagés, comme par exemple des matériaux métalliques, à condition que ces matériaux aient des propriétés élastiques intrinsèques qui permettent une déformation élastique de l'organe de battement 16.

Dans une variante de réalisation, et tel que représenté sur la figure 4, l'organe de battement 16 comporte une enveloppe 40 réalisée dans un premier matériau et un noyau 42 réalisé dans un deuxième matériau. Le deuxième matériau (celui du noyau 42) est par exemple plus dense que le premier matériau (celui de l'enveloppe 40). Le premier matériau est par exemple un matériau polymère, comme un élastomère et le deuxième matériau est par exemple un matériau métallique. L'enveloppe 40 peut être réalisée par surmoulage sur le noyau 42.

Le noyau 42 peut être réalisé en plusieurs parties disjointes, par exemple en deux parties disjointes, avec une première partie 44 agencée pour ce qui concerne la première jambe 30 et une seconde partie 46 agencée pour ce qui concerne la seconde jambe 32. Dans une variante possible de réalisation, le noyau 42 peut être en une seule partie et s'étendre sur sensiblement toute la longueur de l'organe de battement 16. Le noyau 42 peut également être en une seule partie et être agencé uniquement dans la première jambe 30 ou dans la seconde jambe 32 de ressort 12. Enfin, le noyau 42 peut être agencé uniquement et/ou partiellement dans la partie de liaison 34.

Le noyau permet par exemple d'ajuster les fréquences vibratoires de chacune des jambes afin de « caler » ses fréquences vibratoires en fonction des modes à amortir.

Dans une réalisation, la partie de liaison 34 de l'organe de battement 16 comporte un logement de solidarisation 48 au ressort 12, prévu dans l'épaisseur e de l'organe de battement 16 comme illustré sur la figure 3. Par suite, l'organe de battement 16 est solidarisé au ressort 12 à l'endroit et dans la partie de liaison 34. Par exemple, le logement de solidarisation 48 a, en l'absence de sollicitations extérieures, une forme sensiblement cylindrique de section circulaire avec un axe de cylindre L orthogonal à la première direction d'extension X1 et/ou à la seconde direction d'extension X2. Le logement de solidarisation 48 est ouvert sur une face de l'organe de battement 16, appelée ci-après face extérieure 50. Le logement de solidarisation 48 est ouvert à l'endroit de son enveloppe cylindrique 52 sur toute la largeur de la partie de liaison 34 et définit une ouverture de solidarisation 54. Eventuellement la largeur de la partie de liaison est de l'ordre de 20mm.

L'ouverture de solidarisation 54 du logement 48 (également appelée ci-dessous ouverture d'encliquetage) a une dimension transversale légèrement plus petite que le diamètre d de spire 18 du ressort 12. L'ouverture de solidarisation 54 présente une surface permettant un appui glissant. Ainsi, par les propriétés élastiques du matériau de l'organe de battement 16 et par la forme de l'ouverture de solidarisation 54 du logement de solidarisation 48, une portion de spire Sp du ressort 12 ayant un axe d'oscillation Sa (correspondant à l'axe central de spire A sur la portion de spire Sp) peut venir s'encliqueter dans l'organe de battement 16 vers le logement de solidarisation 48. La portion de spire Sp correspond à une section de spire 18 du ressort 12. Par exemple, la portion de spire Sp correspond à une section angulaire de quelques degrés, en l'espèce de 4 degrés à 10 degrés.

L'organe de battement 16 est localisé, comme illustré figure 1, solidaire d'une - et d'une seule - portion de spire 18 du ressort 12 qui est définie et située entre la première extrémité 22 de ressort 12 et la seconde extrémité 24 de ressort 12. L'organe de battement 16 est agencé sur la portion de spire de sorte que celui-ci ne peut se déplacer le long de la spire 18. L'organe de battement 16 est solidarisé rigidement à la portion de spire Sp par adhérisation à chaud ou à froid. En d'autres termes, l'organe de battement 16 est surmoulé sur le ressort 12. Plus précisément, la surface définissant le logement de solidarisation 48 de l'organe de battement 16 est adhérisée sur la portion de spire Sp du ressort 12.

L'organe de battement 16 est solidarisé à une et une seule portion de spire 18 du ressort 12, étant pourvu d'une et d'une seule partie de liaison 34, et d'un et d'un seul logement de solidarisation 48 au ressort 12.

La première jambe 30 et la deuxième jambe 32 sont adaptées pour osciller dans un mouvement de va-et-vient à une certaine fréquence et réalise ainsi une fonction de « battement » permettant l'amortissement des modes vibratoires indésirables.

Lors de leurs battements, la première jambe 30 et la deuxième jambe 32 n'interfèrent pas avec la spire 18 et ne viennent pas gêner ou bloquer la compression ou la détente du ressort 12, dans le cas d'un ressort de compression. A cet effet, la longueur Ll.de la première jambe 30 est inférieure au diamètre intérieur du ressort. Ainsi lors de son oscillation, la première jambe 30 agencée dans l'espace intérieur de ressort 30 n'entre pas en contact avec les spires du ressort 12. Ainsi, l'amplitude d'oscillation de la première jambe 30 et/ou de la deuxième jambe 32 ne sera pas limitée par la partie de ressort 12 située diamétralement opposée à la portion de spire Sp. L'oscillation de la première jambe 30 et de la deuxième jambe 32 va entrainer un amortissement du mode vibratoire indésirable, notamment dans le sens dit « radial ressort », en d'autres termes, selon une direction transversale par rapport à l'axe de compression X. L'organe de battement 16 crée sur le ressort une masse additionnelle. Cet organe de battement 16 lors de l'oscillation de la première jambe 30 et de la deuxième jambe 32 va alors créer sur la spire un moment variable.

En fonctionnement du ressort 12, celui-ci réalise alternativement des mouvements de compression (où les spires se resserrent (où la distance entre deux spires augmente). Les mouvements de compression et de détente (ou d'expansion) sont alternatifs et répétés à diverses fréquences de fonctionnement, et entrainent l'oscillation de la première jambe 30 et/ou de la deuxième jambe 32 de l'organe de battement 16. L'oscillation de la première jambe 30 et/ou de la deuxième jambe 32 est alternative. En d'autres termes, la première jambe 30 et/ou la deuxième jambe 32 ont un mouvement de va-et-vient s'éloignant et se rapprochant des spires du ressort 12. Le mouvement en «va-et-vient » des jambes assure la fonction dite de « battement » de l'organe de battement 16. La position de l'organe de battement 16 sur les spires du ressort, ainsi que les dimensions de l'organe de battement et le poids de l'organe de battement 16 va définir une fréquence déterminée lors de laquelle les jambes vont osciller généralement sensiblement en opposition de phase ou/et selon l'objectif recherché avec un certain décalage permettant l'atténuation optimum sur le ressort pour contrer son oscillation transversale. En l'espèce la première jambe 30 et la deuxième jambe 32 assurent la fonction de « battement » et l'oscillation de la première jambe 30 et de la deuxième jambe 32 vient sensiblement en opposition de phase avec un (ou des) mode(s) vibratoire(s) indésirable(s) du ressort pour amortir l'amplitude de ces vibrations indésirables.

Plus précisément, l'extrémité de la première jambe éloignée de la partie intermédiaire 34 va, lors d'un mouvement de battement de la première jambe, être à une distance différente des spires du ressort 12 que l'extrémité de la première jambe 30 à proximité de la partie intermédiaire 34.

La première jambe 30 est agencée dans l'espace intérieur de ressort E. La seconde jambe 32 est agencée hors de l'espace intérieur de ressort E. Par exemple, dans un état dit « non sollicité » du ressort 12, c'est dire, lorsque le ressort 12 n'est soumis à aucune force extérieure et les spires 18 du ressort 12 sont au repos ou encore dans un état de « normal » de fonctionnement au repos précontraint, la première direction d'extension X1 de la première jambe 30 peut être sensiblement parallèle à l'axe de compression X. Dans l'état non sollicité du ressort, la seconde direction d'extension X2 de la seconde jambe 32 peut être parallèle à l'axe de compression X. La position de l'organe de battement 16 correspondante (c'est-à-dire lorsque la première direction d'extension X1 et la seconde direction d'extension X2 sont parallèles à l'axe de compression X) peut être une position d'équilibre de l'organe de battement 16.

Dans une réalisation, l'ouverture de solidarisation 54 du logement de solidarisation 48 est agencée du côté de la partie de liaison 34 à partir duquel s'étend la première jambe 30, lorsque la première jambe 30 est agencée dans l'espace intérieur de ressort E. Cette disposition constructive permet de solidariser l'organe de battement 16 depuis l'extérieur du ressort 12 selon un mouvement vers le ressort 12 dans une direction sensiblement parallèle à l'axe de compression X dans un sens allant de la première assise 26 vers la seconde assise 28.

Dans un exemple de réalisation, un opérateur cherchant à installer l'organe de battement 16 sur le ressort 12 depuis l'extérieur du ressort 12 vient insérer dans un premier temps la première jambe 30 dans l'espace intérieur de ressort E. Lors de l'insertion de la première jambe 30, l'organe de battement peut être dans une position telle que la première jambe 30 s'étend selon une direction sensiblement orthogonale ou formant un angle non nul avec la direction de compression X. L'opérateur vient insérer la première jambe 30 dans l'espace intérieur de ressort E jusqu'au premier coude 36. L'opérateur fait ensuite pivoter l'organe de battement 16 de façon à agencer la première jambe 30 parallèlement à l'axe de compression X et de façon à mettre la face extérieure 50 de la partie de liaison 34 en regard de la portion de spire Sp. L'opérateur vient, dans un second temps, par translation de l'organe de battement 16 dans une direction parallèle à l'axe de compression X dans un sens allant de la première assise 26 vers la deuxième assise 28, amener en contact la bordure extérieure à l'ouverture de solidarisation 54 de l'organe de battement 16 avec la portion de spire Sp. Enfin, l'opérateur réalise l'opération d'encliquetage de l'organe de battement 16 sur la portion de spire Sp en déformant élastiquement l'ouverture de solidarisation 54 de sorte que celle-ci ai une dimension transversale adaptée pour faire passer la portion de spire Sp dans le logement de solidarisation 48. Après insertion de la portion de spire Sp dans le logement de solidarisation, l'ouverture d'encliquetage retrouve élastiquement ses dimensions dites « au repos », à savoir soumise à aucune contrainte extérieure, et assure la solidarisation de l'organe de battement sur la spire 18. On vient ensuite solidariser l'organe de battement 16 sur la portion de spire Sp du ressort 12 par adhérisation à chaud et/ou à froid. Une éventuelle étape de dégraissage et d'étuvage du ressort peut avoir lieu éventuellement avant l'étape d'adhérisation. Cette étape permet le cas échéant d'assurer la qualité de l'adhérisation de l'organe de battement 16 sur la portion de spires Sp.

Eventuellement, un élément d'assemblage mécanique rapporté tel qu'une bride, un collier ou autre peut être utilisé pour sécuriser et/ou fixer l'organe de battement sur la portion de spire. L'élément d'assemblage mécanique rapporté remplace et/ou complète la fixation par adhérisation.

Tel que représentée sur la figure 1, la face extérieure 50 de la première jambe 30 de l'organe de battement 16 est en regard des spires du ressort 12, et la face extérieure 50 de la seconde jambe 32 de l'organe de battement 16 est orientée dans une direction opposée aux spires du ressort 12.

L'organe de battement 16 peut être situé sur des spires centrales du ressort 12. Tel qu'illustré sur la figure 1, le ressort 12 a six spires 18 (comme précédemment décrit) et l'organe de battement 16 est solidarisé sur la troisième spire à partir de la première assise 26. Toutefois, l'organe de battement 16 peut éventuellement être solidarisé sur n'importe quelle spire du ressort 12 à condition que les longueurs de la première jambe 30 et de la seconde jambe 32 du ressort 12 soient compatibles.

Comme illustré sur la figure 1, la première jambe 30 du ressort 12 a une longueur sensiblement égale à la longueur parcourue par deux spires 18 du ressort 12 dans la direction de compression X. La seconde jambe 32 du ressort 12 a une longueur sensiblement égale à la longueur parcourue par deux spires 18 du ressort 12 dans la direction de compression X. Toutefois, la longueur de la première jambe 30 et la longueur de la seconde jambe 32 peuvent dans des variantes de réalisation être plus ou moins longue par rapport à la distance parcourue par deux spires dans la direction de compression X. En outre, la longueur de la première jambe 30 et la longueur de la seconde jambe 32 peuvent dépendre de la spire sur laquelle l'organe de battement 16 est destiné à venir se solidariser. En d'autres termes, la longueur de la première jambe 30 et la longueur de la seconde jambe 32 peuvent dépendre de la position de l'organe de battement 16 sur le ressort 12 selon la direction de compression X.

Sur la figure 2, le dispositif d'amortissement 10 comporte, en plus de l'organe de battement 16 (appelé dans la suite de la description en référence à cette variante de réalisation premier organe de battement 16), un deuxième organe de battement56, distinct structurellement l'un de l'autre. Le deuxième organe de battement 56 est conforme à la description faite ci-dessus du premier organe de battement 16. Pour des raisons de productions en série, le premier organe de battement 16 et le deuxième organe de battement 56 sont identiques. Toutefois, dans certaines variantes de réalisation, le deuxième organe de battement 56 peut être différent du premier organe de battement 16, et ainsi avoir un comportement vibratoire différent qui peut être rendu nécessaire dans certaines applications.

Le deuxième organe de battement illustré sur la figure 2 est disposé sensiblement à proximité du premier organe de battement 16. Plus précisément, le deuxième organe de battement 56 est disposé sur la même spire 18 que le premier organe de battement 16. Toutefois, dans des variantes de réalisation, le premier organe de battement 16 et le deuxième organe de battement 56 peuvent être situés sur des spires 18 différentes du ressort 12. Le premier organe de battement 16 et le deuxième organe de battement 56 peuvent également être disposés diamétralement opposés, par exemple. Dans des variantes possibles de réalisation, le dispositif d'amortissement peut comporter plus de deux organes de battement.

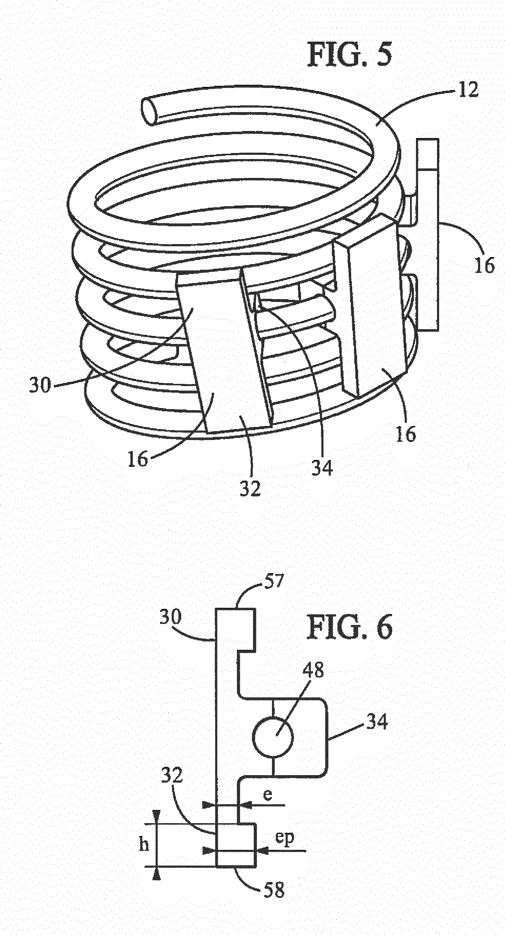

La figure 5 illustre une variante de réalisation du dispositif d'amortissement ci-dessus décrit. Plus particulièrement, les figures 5 et 6 illustrent une variante de réalisation de l'organe de battement 16. Tel qu'illustré sur la figure 6, l'organe de battement 16 comporte deux jambes 30, 32 reliées entre elles par la partie de liaison 34. La première jambe 30 et la deuxième jambe 32 sont dans le prolongement l'une de l'autre ; En d'autres termes, la première jambe et la seconde jambe 30, 32 forment sensiblement un plan, et la partie de liaison 34 fait saillie du plan formé par la première et la deuxième jambe 30, 32. La partie de liaison 34 a une section sensiblement carrée et comporte un logement de solidarisation 48 sensiblement cylindrique et fermé. Dans une réalisation, telle que représentée sur la figure 5, la première jambe et la seconde jambe 32 ont une certaine épaisseur e qui est constante et sensiblement la même pour les deux jambes. Par exemple, l'épaisseur des jambe e est de l'ordre de 7mm. Dans une variante de réalisation, telle que représentée sur la figure 6, la première jambe comporte une extrémité libre 57, la seconde jambe comporte une extrémité libre 58, et l'épaisseur de la première et de la seconde jambe est renforcée au niveau des extrémités libres des première et deuxième jambes57, 58. Toutefois, dans des variantes de réalisation, seule l'épaisseur de l'extrémité libre de la première jambe 30 est renforcée. Eventuellement, l'épaisseur renforcée ep des extrémités libres 57, 58 des première et seconde jambes est de l'ordre de 14 mm et s'étend sur une hauteur h de l'ordre de 13mm.

Tel qu'illustré sur la figure 5, l'organe de battement 16 est solidarisé sur la portion de spire Sp par le logement de solidarisation 48 qui est fermé. L'organe de battement 16 est sensiblement en dehors de l'espace intérieur de ressort E défini par le ressort 12. Plus précisément, la première jambe 30 et la seconde jambe 32 sont en dehors de l'espace intérieur de ressort E alors que la partie de liaison 34 est en partie à l'intérieur de l'espace intérieur de ressort et en partie à l'extérieur de l'espace intérieur de ressort. Par exemple, l'organe de battement est réalisé en deux portions, une première portion composée de la première jambe 30, de la seconde jambe 32 et de la partie de liaison 34 destinée à être située à l'extérieur de l'espace intérieur de ressort E, et une deuxième portion composée de la partie de liaison destinée à être située à l'intérieur de l'espace intérieur de ressort E. Les deux portions de l'organe de battement 16 sont solidarisées l'une avec l'autre autour de la portion de spire Sp et permettent de solidariser l'organe de battement 16 sur le ressort 12 par l'intermédiaire du logement de solidarisation 48. La solidarisation est réalisée par adhérisation. Une technique d'adhérisation à chaud peut être utilisée. Il est également possible d'utiliser une technique d'adhérisation à froid. Ces techniques d'adhérisation permettent une adhérisation sur la portion de spires du ressort efficace, en particulier lorsque l'organe de battement 16, ou sa surface destinée à venir au contact de la portion de spire du ressort est réalisée en matériau élastomère. On utilise par exemple une presse conventionnelle pour assurer de façon pérenne le surmoulage de l'organe de battement 16 sur la portion de spires Sp. La presse intensifie la réticulation de la colle.

Cette variante de réalisation, illustrée aux figures 5 et 6, encore appelée variante en « I » du à la forme droite de l'organe de battement est particulièrement intéressante en terme de réglage et de mise en oeuvre. En outre, comme illustré sur la figure 5 trois organes de battement 16 peuvent être prévus dans le dispositif d'amortissement 10. Chacune des première et seconde jambes 30, 32 oscille à l'extérieur de l'espace intérieur de ressort.

En variante, l'organe de battement 16 est solidarisé à la spire par serrage. C'est-à-dire que le logement de solidarisation 48, lorsque l'organe de battement 16 n'est pas assemblé à la spire, présente une forme plus petite que la portion de spire. Le serrage est mis en oeuvre uniquement par le matériau élastomère constitutif de l'organe de battement 16 au niveau du logement de solidarisation 48. L'assemblage de l'organe de battement à la portion de spire provoque donc une compression élastique du matériau élastomère déformable de l'organe de battement au niveau du logement de solidarisation. L'ensemble du matériau élastomère au voisinage du logement de solidarisation 48 est comprimé. L'élasticité naturelle du matériau élastomère déformable de l'organe de battement sollicite celui-ci en contact serré avec la portion de spire, générant ainsi par friction une force de rétention importante empêchant tout mouvement relatif de l'organe de battement et de la portion de spire le long de la spire. Ce mode de réalisation peut par exemple utiliser un organe de battement en deux portions distinctes ou partiellement distinctes disposées autour de la portion de spire dans une configuration d'installation dans laquelle le logement de solidarisation comporte un volume plus important que la portion de spire, puis assemblées l'une à l'autre dans la configuration décrite ci-dessus. L'assemblage est par exemple fait par clipsage des deux portions de l'organe de battement l'une sur l'autre.

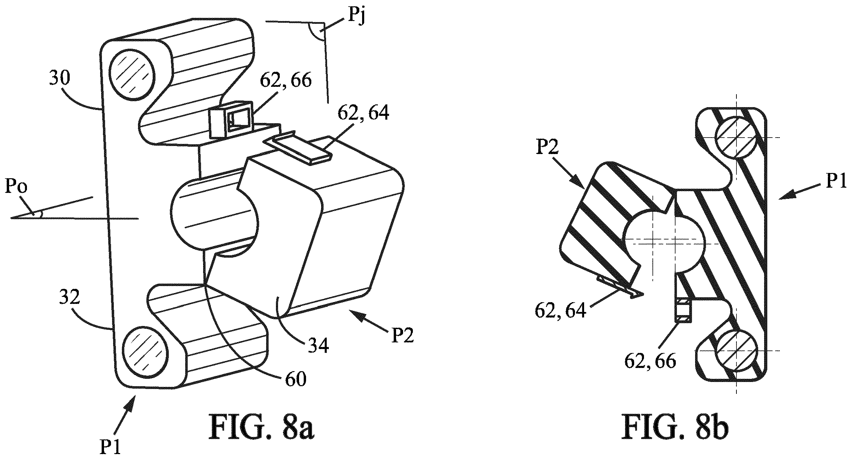

Les figures 8a et 8b illustrent une variante de réalisation similaire à celle illustrée sur la figure 5 dans laquelle l'organe de battement est réalisé en deux portions, une première portion P1 composée de la première jambe 30, de la seconde jambe 32 et de la partie de liaison 34 destinée à être située à l'extérieur de l'espace intérieur de ressort E, et une deuxième portion P2 composée de la partie de liaison destinée à être située à l'intérieur de l'espace intérieur de ressort E. Les deux portions P1, P2 de l'organe de battement 16 sont solidarisées l'une avec l'autre autour de la portion de spire Sp par encliquetage. Par exemple, la deuxième portion P2 est reliée à la portion P1 d'une part par une charnière film 60, et de l'autre un système par encliquetage 62 permet la fixation de la première portion P1 à la deuxième portion P2 pour leur assemblage autour de la spire. La charnière film 60 et le système par encliquetage 62 sont sensiblement de part et d'autre d'un plan Po passant par le centre du logement de solidarisation 48 et orthogonal au plan formé par la première et la seconde jambe 30, 32.

Le système par encliquetage comprend un premier élément 64 fixé sur la deuxième portion P2 et un deuxième élément 66 fixé sur la première portion P1. Les premier et deuxième éléments 64, 66 coopèrent l'un avec l'autre par complémentarité de forme et s'assemble l'un à l'autre par serrage effectué uniquement par la résistance à la déformation inhérente aux matériaux dont sont fait les premier et deuxième éléments 64, 66. En l'espèce les premier et deuxième éléments 64, 66 sont agencés de part et d'autre du logement de solidarisation 48 et sensiblement dans un plan Pj parallèle au plan formé par les première et seconde jambes 30, 32 et passant par le centre du logement de solidarisation.

Pour solidariser l'organe de battement 16 sur la portion de spire Sp, on approche l'organe de battement avec le système d'encliquetage 62 en position dite ouverte (configuration d'installation, à savoir, lorsque les premier et deuxième éléments ne coopèrent pas ensemble, et que la deuxième portion P2 est libre de pivoter autour de l'axe formé par la charnière film 60 autour de la première portion) du ressort, on fait traverser entre deux spires du ressort 12 la deuxième portion P2. On fait ensuite pivoter la deuxième portion P2 autour de l'axe formé par la charnière film de sorte à ramener la deuxième portion P2 en regard de la première portion P1, et plus particulièrement de sorte à ramener le première élément 64 en regard du deuxième élément 66 et de les assembler l'un à l'autre pour assembler la portion de spire Sp à l'organe de battement 16.

En outre, pour une solidarisation complète de l'organe de battement sur la portion de spire Sp par compression, le diamètre du logement de solidarisation 48 est légèrement inférieur au diamètre de spire dans cette configuration, comprimant ainsi le matériau de l'organe de battement sur la portion de spire au niveau du logement de solidarisation 48.

Tel qu'illustré sur les figures 8a et 8b, le premier élément 64 comporte une partie sous forme de languette et est introduit dans le deuxième élément 66 qui comporte une ouverture. La partie sous forme de languette est déformée lors de son introduction dans l'ouverture avant de revenir élastiquement à sa position initiale et de s'ancrer dans la paroi formant l'ouverture du deuxième élément 66.

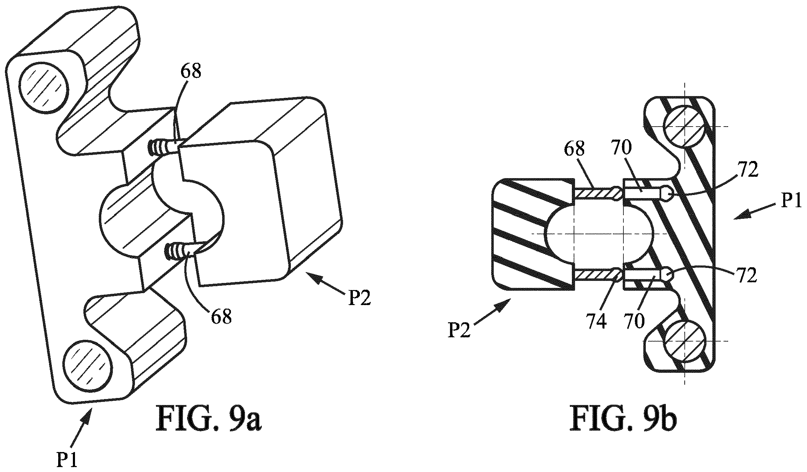

Les figures 9a et 9b illustrent également une variante de réalisation similaire à celle illustrée sur la figure 5 dans laquelle l'organe de battement est réalisé en deux portions, une première portion P1 composée de la première jambe 30, de la seconde jambe 32 et de la partie de liaison 34 destinée à être située à l'extérieur de l'espace intérieur de ressort E, et une deuxième portion P2 composée de la partie de liaison destinée à être située à l'intérieur de l'espace intérieur de ressort E. Les deux portions P1, P2 de l'organe de battement 16 sont solidarisées l'une avec l'autre autour de la portion de spire Sp par encliquetage.

Contrairement à la variante de réalisation représentée sur les figures 8a et 8b, la première portion P1 et la deuxième portion P2 sont deux pièces distinctes l'une de l'autre. La deuxième portion P2 vient s'encliqueter dans la première portion P1 par l'intermédiaire de deux axes 68 agencés de part et d'autre du logement de solidarisation 48. Les deux axes 68 sont adaptés pour venir se loger dans deux orifices 70 prévus sur la première portion P1. Les orifices 70 sont borgnes et de section sensiblement circulaire avec un agrandissement de section 72 prévu vers le fond de chaque orifice. Chaque agrandissement de section 72 est adapté pour recevoir l'extrémité libre 74 de chaque axe 68 qui a un diamètre supérieur au diamètre général de l'axe 68.

Pour assembler la première portion P1 et la deuxième portion P2 et solidariser l'organe de battement sur la portion de spire Sp, on vient mettre en regard les axes 68 avec leurs orifices 70 correspondant. On fait entrer par force (le diamètre de l'extrémité libre 74 de l'axe 68 étant supérieur au diamètre général de l'orifice 70) les axes 68 dans les orifices 70 jusqu'à ce que l'extrémité libre vienne coopérer avec l'agrandissement de section 72.

La coopération de l'agrandissement de section 72 avec l'extrémité libre de l'axe 68 correspond sensiblement à la mise en contact de la première portion P1 et de la deuxième portion P2 autour du logement de solidarisation.

Pour une solidarisation complète de l'organe de battement sur la portion de spire Sp par compression, le diamètre du logement de solidarisation 48 est légèrement inférieur au diamètre de spire dans cette configuration, comprimant ainsi le matériau de l'organe de battement sur la portion de spire au niveau du logement de solidarisation 48.

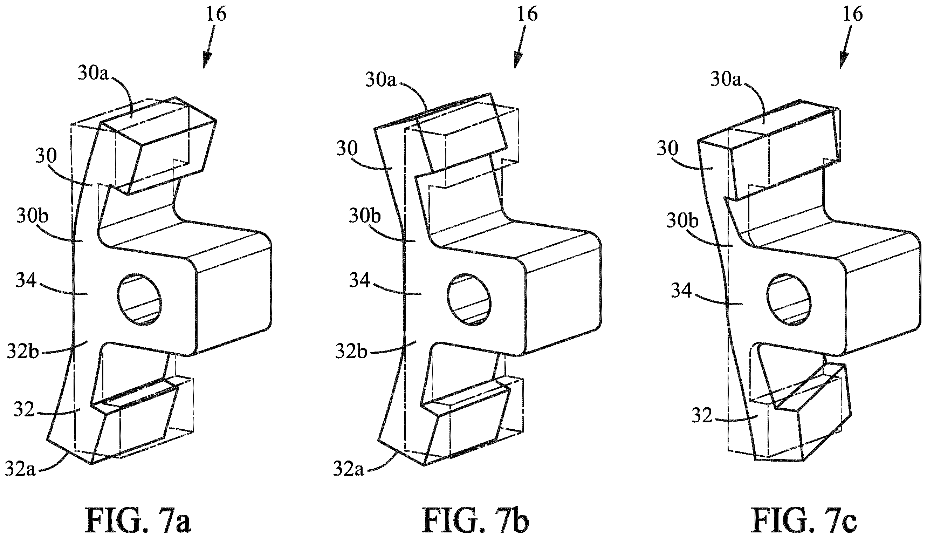

Les figures 7a à 7c illustrent de façon schématique le battement de la première jambe 30 et de la deuxième jambe 32. En considérant la première jambe 30, l'extrémité 30a de la première jambe 30 éloignée de la partie intermédiaire 34 va, lors d'un mouvement de battement de la première jambe 30, être à une distance différente des spires du ressort 12 que l'extrémité 30b de la première jambe 30 à proximité de la partie intermédiaire 34. En d'autres termes, et tel qu'illustré sur les figures 7a à 7c, l'extrémité 30b à proximité de la partie intermédiaire 34 fixée solidaire de la portion de spire Sp va rester à la même distance de la portion de spire Sp, tandis que l'extrémité 30a va réaliser un mouvement de va-et-vient en se rapprochant et en s'éloignant de la portion de spire Sp. Ce mouvement de va-et-vient, ou encore ce mouvement de battement va assurer l'amortissement des modes vibratoires indésirables. Le mouvement de la première jambe 30, et de l'extrémité libre 30a est sensiblement dans la direction radiale et est un mouvement de va-et-vient qui se rapproche et s'éloigne de la portion de spire Sp.

L'amplitude de mouvement de la première jambe 30 et de la deuxième jambe 32 est différente sur toute la longueur de la jambe. Ainsi, les extrémités libres de la première jambe et de la deuxième jambe 30a, 32a auront une amplitude de mouvement plus importante qu'en tout autre point de la première jambe et de la deuxième jambe. Inversement, les extrémités 30b, 32b à proximité de la partie de liaison 34 auront une amplitude de mouvement quasi-nulle. Ainsi, l'amplitude de mouvement décroit de l'extrémité libre 30a, 32a, à l'extrémité 30b, 32b proche de la partie de liaison 34 pour chacune des première jambe 30 et deuxième jambe 32.

Le nombre d'organes de battement, leur disposition sur le ressort 12, la forme des jambes, et leur masse ainsi que la répartition de leur masse (avec éventuellement la présence d'un noyau) seront déterminés en fonction des modes vibratoires de l'ensemble formé par le ressort 12 et la première assise 26 et la seconde assise 28.

## Revendications

1. Dispositif d'amortissement (10), notamment suspension pour véhicule, comprenant :
- un ressort hélicoïdal (12) comportant un axe de compression (X), une première extrémité (22) et une seconde extrémité (24) de ressort et une pluralité de spires (18) s'étendant selon l'axe de compression (X) entre la première extrémité (22) de ressort et la seconde extrémité (24) de ressort, la pluralité de spires (18) définissant un espace intérieur de ressort (E)
- un organe de support (14) comportant une première assise (26) et une seconde assise (28), ladite première assise (26) étant destinée à recevoir en appui la première extrémité (22) du ressort, et ladite seconde assise (28) étant destinée à recevoir en appui la seconde extrémité (24) du ressort,
- un organe de battement (16) localisé, solidaire rigidement d'une portion de spire du ressort (12) entre la première extrémité (22) de ressort et la seconde extrémité (24) de ressort, les matériaux de l'organe de battement (16) permettant sa déformation élastique, la solidarisation de l'organe de battement (16) à ladite portion de spire étant agencée de sorte que l'organe de battement (16), d'une part, ne peut se déplacer substantiellement le long de la spire, d'autre part, peut osciller par rapport à un axe central (Sa) de la portion de spire (Sp), l'organe de battement (16) comportant un logement de solidarisation (48) à ladite portion de spire du ressort (12) et des jambes (30, 32) s'étendant selon des directions d'extension parallèles et adaptées pour osciller par déformation élastique, l'organe de battement (16) ayant une fréquence de résonnance propre dépendante des modes vibratoires du ressort (12) de façon à amortir la fréquence de vibration des spires du ressort (12),
**caractérisé en ce que** :
- l'organe de battement (16) comporte une première jambe (30), une seconde jambe (32) et une partie de liaison (34), les jambes (30, 32) étant reliées entre elles par la partie de liaison (34) et s'étendant selon deux sens opposés à partir de la partie de liaison (34),
- soit l'organe de battement a en élévation latérale une forme de S allongé et aplati, avec la première jambe (30) agencée dans l'espace intérieur du ressort (12) et la seconde jambe (32) agencée hors de l'espace intérieur du ressort (12), la première jambe (30) étant reliée à la partie de liaison (34) par un premier coude (36) et la seconde jambe (32) étant reliée à la partie de liaison (34) par un second coude (36),
- soit l'organe de battement a une forme de l, avec la première jambe (30) et la seconde jambe (32) agencées hors de l'espace intérieur du ressort (12), et dans le prolongement l'une de l'autre, de sorte à former un plan, la partie de liaison (34) étant en saillie.

2. Dispositif d'amortissement (10) selon la revendication 1, dans lequel au moins un deuxième organe de battement (54) est prévu, associé à une deuxième portion de spire du ressort.

3. Dispositif d'amortissement (10) selon la revendication 1 ou 2, dans lequel la partie de liaison (34) de l'organe de battement (16) comporte le logement de solidarisation (48) à la portion de spire (Sp) du ressort (12).

4. Dispositif d'amortissement (10) selon la revendication 3, dans lequel, avec un organe de battement en S, le logement de solidarisation (48) est ouvert avec une ouverture de solidarisation (54).

5. Dispositif d'amortissement (10) selon la revendication 4, dans lequel l'ouverture de solidarisation (54), d'encliquetage, a, en l'absence de sollicitation extérieure, une dimension transversale légèrement plus petite que le diamètre d de spire (18) du ressort (12), l'ouverture de solidarisation (54) présentant une surface permettant un appui glissant, de sorte qu'une portion de spire (Sp) du ressort (12) peut venir s'encliqueter dans l'organe de battement (16) vers le logement de solidarisation (54).

6. Dispositif d'amortissement (10) selon la revendication 3, dans lequel, avec un organe de battement en l, le logement de solidarisation (48) est fermé.

7. Dispositif d'amortissement (10) selon l'une quelconque des revendications 1 à 6, dans lequel l'organe de battement (16) est solidarisé à la portion de spire par adhérisation à chaud ou adhérisation à froid de l'enveloppe sur la portion de spires.

8. Dispositif d'amortissement (10) selon l'une quelconque des revendications 1 à 6, dans lequel l'organe de battement (16) solidarise l'organe de battement (16) sur la portion de spire (Sp) par serrage mis en oeuvre par une portion élastomère élastiquement comprimée de l'organe de battement (16) sur la portion de spire (Sp).

9. Dispositif d'amortissement (10) selon l'une quelconque des revendications 1 à 8, dans lequel l'organe de battement (16) est entièrement réalisé en matériau élastomère et/ou en matériau semi-rigide.

10. Dispositif d'amortissement (10) selon l'une quelconque des revendications 1 à 8, dans lequel l'organe de battement (16) comporte une enveloppe (40) réalisée dans un premier matériau ayant une première densité et un noyau (42) réalisé dans un deuxième matériau ayant une deuxième densité, et la deuxième densité est supérieure à la première densité.

11. Dispositif d'amortissement (10) selon l'une des revendications 1 à 10, dans lequel la première jambe (30) et/ou la seconde jambe(s) (32) sont droites.

12. Dispositif d'amortissement (10) selon l'une des revendications 1 à 11, dans lequel la première jambe (30) et/ou la seconde jambe(s) (32) s'étend(ent) sur une longueur selon leur direction d'extension (X1, X2) sensiblement égale à la longueur parcourue par deux spires (Sp) du ressort (12) dans la direction de l'axe de compression (X).

13. Dispositif d'amortissement (10) selon l'une des revendications 1 à 11, avec une longueur de la première jambe (30), de la seconde jambe (32), plus longue par rapport à la distance parcourue par deux spires dans la direction de compression (X).

14. Dispositif d'amortissement (10) selon l'une des revendications 1 à 11, avec une longueur de la première jambe (30), de la seconde jambe (32), moins longue par rapport à la distance parcourue par deux spires dans la direction de compression (X).

15. Dispositif d'amortissement (10) selon l'une quelconque des revendications 1 à 14, dans lequel la spire à laquelle l'organe de battement (16) est solidarisé est située dans la portion centrale du ressort (12) de façon que l'organe de battement (16) amortisse la fréquence de vibration des spires (Sp) appartenant à ladite portion centrale du ressort (12).

## Patentansprüche

1. Dämpfungsvorrichtung (10), insbesondere eine Federung für ein Fahrzeug, welche folgendes umfasst:
- eine Schraubenfeder (12), welche eine Druckachse (X) umfasst, wobei sich ein erstes Federende (22), ein zweites Federende (24) und eine Vielzahl von Windungen (18) zwischen dem ersten Federende (22) und dem zweiten Federende (24) an der Druckachse (X) entlang erstrecken, wobei die Vielzahl von Windungen (18) einen Federinnenraum (E) abgrenzen;
- ein Trägerelement (14), welches einen ersten Sitz (26) und einen zweiten Sitz (28) umfasst, wobei das erste Federende (22) an den ersten Sitz (26), und das zweite Federende (28) an den zweiten Sitz (28) gedrückt wird;
- ein lokalisiertes Schlagelement (16), das mit einem Windungsabschnitt der Feder (12) zwischen dem ersten Federende (22) und dem zweiten Federende (24) starr verbunden ist, wobei die Materialien des Schlagelements (16) seine elastische Verformung ermöglichen, wobei die Verbindung des Schlagelements (16) mit besagtem Windungsabschnitt so angeordnet ist, dass sich das Schlagelement (16) zum einen nicht wesentlich entlang der Windung bewegen kann, und es zum anderen in Bezug auf eine Mittelachse (Sa) des Windungsabschnitts (Sp) schwingen kann, wobei das Schlagelement (16) eine Aufnahme zur Verbindung (48) mit dem Windungsabschnitt der Feder (12) umfasst und Beine (30, 32), die sich in den parallel laufenden Ausdehnungsrichtungen erstrecken und dazu geeignet sind, durch elastische Verformung zu schwingen, wobei das Schlagelement (16) eine Eigenresonanzfrequenz hat, die von den Schwingungsformen der Feder (12) abhängt, so dass die Schwingungsfrequenz der Windungen der Feder (12) gedämpft wird,
**dadurch gekennzeichnet, dass**:
- das Schlagelement (16) ein erstes Bein (30), ein zweites Bein (32) und ein Verbindungsteil (34) umfasst, wobei die Beine (30, 32) durch das Verbindungsteil (34) miteinander verbunden sind und sich vom Verbindungsteil (34) aus in zwei entgegengesetzte Richtungen erstrecken,
- entweder das Schlagelement in der Seitenansicht eine längliche, abgeflachte S-Form hat, und das erste Bein (30) im Innenraum der Feder (12) und das zweite Bein (32) außerhalb des Innenraums der Feder (12) angeordnet ist, wobei das erste Bein (30) durch ein erstes Kniestück (32) mit dem Verbindungsteil (34) verbunden ist und das zweite Bein (32) durch ein zweites Kniestück (36) mit dem Verbindungsteil (34) verbunden ist,
- oder das Schlagelement eine I-Form hat, wobei das erste Bein (30) und das zweite Bein (32) außerhalb des Innenraums der Feder (12) in der Verlängerung zueinander angeordnet sind, sodass eine Ebene gebildet wird, auf der das Verbindungsteil (34) vorsteht.

2. Dämpfungsvorrichtung (10) nach Anspruch 1, in der zumindest ein zweites Schlagelement (54) vorgesehen ist, das mit einem zweiten Windungsabschnitt der Feder verbunden ist.

3. Dämpfungsvorrichtung (10) nach Anspruch 1 oder 2, in der das Verbindungsteil (34) des Schlagelements (16) die Aufnahme zur Befestigung (48) mit dem Windungsabschnitt (Sp) der Feder (12) umfasst.

4. Dämpfungsvorrichtung (10) nach Anspruch 3, in der die Befestigungsaufnahme (48) mit einem Schlagelement in S-Form zu einer Befestigungsöffnung (54) geöffnet wird.

5. Dämpfungsvorrichtung (10) nach Anspruch 4, in der die Öffnung zur Befestigung (54) und zum Eingreifen bei Nichtbeanspruchung von außen eine Querabmessung hat, die geringfügig kleiner als der Windungsdurchmesser d (18) der Feder (12) ist, wobei die Befestigungsöffnung (54) eine Oberfläche aufweist, die eine gleitende Auflage ermöglicht, sodass ein Windungsabschnitt (Sp) der Feder (12) in das Schlagelement (16) zur Befestigungsaufnahme (54) hin eingreifen kann.

6. Dämpfungsvorrichtung (10) nach Anspruch 3, in der die Befestigungsaufnahme (48) mit einem Schlagelement in I-Form geschlossen ist.

7. Dämpfungsvorrichtung (10) nach einem der Ansprüche 1 bis 6, in der das Schlagelement (16) mit dem Windungsabschnitt durch Heißverklebung oder Kaltverklebung der Hülle am Abschnitt der Windungen befestigt ist.

8. Dämpfungsvorrichtung (10) nach einem der Ansprüche 1 bis 6, in der die Befestigung des Schlagelements (16) am Windungsabschnitt (Sp) durch Aufspannen eines elastisch zusammengedrückten Elastomerabschnitts des Schlagelements (16) auf den Windungsabschnitt (Sp) erfolgt.

9. Dämpfungsvorrichtung (10) nach einem der Ansprüche 1 bis 8, in der das Schlagelement (16) komplett aus einem Elastomermaterial und/oder einem halbstarren Material hergestellt ist.

10. Dämpfungsvorrichtung (10) nach einem der Ansprüche 1 bis 8, in der das Schlagelement (16) eine Hülle (40) umfasst, die aus einem ersten Material mit einer ersten Dichte, und einem Kern (42) aus einem zweiten Material mit einer zweiten Dichte hergestellt ist, und die zweite Dichte größer als die erste Dichte ist.

11. Dämpfungsvorrichtung (10) nach einem der Ansprüche 1 bis 10, in der das erste Bein (30) und/oder das zweite Bein (32) gerade sind.

12. Dämpfungsvorrichtung (10) nach einem der Ansprüche 1 bis 11, in der sich das erste Bein (30) und/oder das zweite Bein (32) in ihrer Ausdehnungsrichtung (X1, X3) über eine Länge erstrecken, die im Wesentlichen gleich der Weglänge ist, die zwei Windungen (Sp) der Feder (12) in Richtung der Druckachse (X) zurücklegen.

13. Dämpfungsvorrichtung (10) nach einem der Ansprüche 1 bis 11, wobei die Länge des ersten Beins (30) und des zweiten Beins (32) länger ist, als die von zwei Windungen in der Druckrichtung (X) zurückgelegte Weglänge.

14. Dämpfungsvorrichtung (10) nach einem der Ansprüche 1 bis 11, wobei die Länge des ersten Beins (30) und des zweiten Beins (32) weniger lang ist, als die von zwei Windungen in der Druckrichtung (X) zurückgelegte Weglänge.

15. Dämpfungsvorrichtung (10) nach einem der Ansprüche 1 bis 14, in der sich die Windung, mit der das Schlagelement (16) verbunden ist, im mittleren Abschnitt der Feder (12) befindet, so dass das Schlagelement (16) die Schwingungsfrequenz der zu diesem mittleren Abschnitt der Feder (12) gehörenden Windungen (Sp) dämpft.

## Claims

1. A damping device (10), in particular a vehicle suspension, comprising:
- a helical spring (12) including a compression axis (X), a first spring end (22) and a second spring end (24) and a plurality of turns (18) extending along the compression axis (X) between the first spring end (22) and the second spring end (24), with the plurality of turns (18) defining a spring inner space (E),
- a support member (14) including a first seat (26) and a second seat (28), with said first seat (26) being intended to receive and support the first end (22) of the spring, and said second seat (28) being intended to receive and support the second end (24) of the spring,
- a localized flap member (16), rigidly secured to a portion of a spring (12) turn between the first spring end (22) and the second spring end (24), with the materials of the flap member (16) allowing the elastic deformation thereof, the securing of the flap member (16) to said turn portion being so arranged that the flap member (16), on the one hand, substantially cannot move along the turn, and on the other hand, can oscillate with respect to a central axis (Sa) of the turn portion (Sp), with the flap member (16) including a housing for securing (48) to said portion of the spring (12) turn and struts (30, 32) extending in parallel directions of extension and adapted to oscillate further to an elastic deformation, with the flap member (16) having a self resonant frequency depending on the spring (12) vibration modes so as to damp the vibration frequency of the spring (12) turns,
**characterized in that**:
- the flap member (16) includes a first strut (30), a second strut (32) and a connecting part (34), with the struts (30, 32) being interconnected by the connecting part (34) and extending in two opposite directions from such connecting part (34),
- either the flap member has, in side elevation, the shape of a long flat S, with the first strut (30) being arranged in the spring (12) inner space and the second strut (32) being arranged outside the spring (12) inner space, with the first strut (30) being connected to the connecting part (34) by means of a first elbow (36) and the second strut (32) being connected to the connecting part (34) by means of a second elbow (36),
- or the flap member has the shape of a l, with the first strut (30) and the second strut (32) being arranged outside the spring (12) inner space, and continuous with each other, so as to form a plan, with the connecting part (34) protruding therefrom.

2. A damping device (10) according to claim 1, wherein at least a second flap member (54) is provided, associated with a second spring turn portion.

3. A damping device (10) according to claim 1 or 2, wherein the connecting part (34) of the flap member (16) includes the housing (48) for securing to the spring turn portion (Sp).

4. A damping device (10) according to claim 3, wherein, with a S-shaped flap member, the securing housing (48) is open through a securing opening (54).

5. A damping device (10) according to claim 4, wherein the ratchet securing opening (54) has a transverse dimension slightly smaller than the diameter d of the spring (12) turn (18), in the absence of any external stress, with the securing opening (54) having a surface which allows a sliding support, so that a spring (12) turn portion (Sp) can snap into the flap member (16) towards the securing opening (54).

6. A damping device (10) according to claim 3, wherein, with a l-shaped flap member, the securing housing (48) is closed.

7. A damping device (10) according to any one of claims 1 to 6, wherein the flap member (16) is secured to the turn portion by hot bonding or cold bonding of the enclosure onto the turn portion.

8. A damping device (10) according to any one of claims 1 to 6, wherein the flap member (16) secures the flap member (16) to the turn portion (Sp) by a clamping implemented by an elastically pressed elastomer portion of the flap member (16) on the turn portion (Sp).

9. A damping device (10) according to any one of claims 1 to 8, wherein the flap member (16) is entirely made of an elastomeric material and/or a semi-rigid material.

10. A damping device (10) according to any one of claims 1 to 8, wherein the flap member (16) includes an enclosure (40) made of a first material having a first density and a core (42) made of a second material having a second density and the second density is higher than the first density.

11. A damping device (10) according to any one of claims 1 to 10, wherein the first strut (30) and/or the second strut (32) are straight.

12. A damping device (10) according to any one of claims 1 to 11, wherein the first strut (30) and/or the second strut (32) extend(s) over a length depending on their direction of extension (X1, X2) substantially equal to the length covered by two spring (12) turns (Sp) in the direction of the compression axis (X).

13. A damping device (10) according to any one of claims 1 to 11, wherein the length of the first strut (30) and of the second strut (32) is longer than the distance covered by two turns in the compression direction (X).

14. A damping device (10) according to any one of claims 1 to 11, wherein the length of the first strut (30) and of the second strut (32) is smaller than the distance covered by two turns in the compression direction (X).

15. A damping device (10) according to any one of claims 1 to 14, wherein the turn which the flap member (16) is secured to is located in the central portion of the spring (12) so that the flap member (16) damps the vibration frequency of the turns (Sp) belonging to said central portion of the spring (12).
